# EUROPEAN PATENT APPLICATION

(11) **EP 0 577 125 A1**
(43) Date of publication of application: **05.01.1994**
(21) Application number: 93110529.0
(22) Date of filing: 01.07.1993
(51) Int. Cl.: B29C 43/28, B29C 67/24, C08G 61/08, B32B 27/08

(54) **Integrally molded laminated composites of ring-opened norbornene-type polymers**

(30) Priority: 01.07.1992 JP 190078/92
(71) Applicant: NIPPON ZEON CO., LTD., Tokyo (JP)
(72) Inventor: Matsui, Masayoshi, Yamato-shi, Kanagawa (JP)
(74) Representative: von Kreisler, Alek, Dipl.-Chem.

(57) **Abstract**

A laminated composite comprising a ring-opened polynorbornene matrix and a polyolefinic ply/ethylene-vinyl acetate ply is disclosed. The tie layer provides an integral bond between the polynorbornene matrix and a polyvinyl halide substrate such as PVC.

## Description

### BACKGROUND OF THE INVENTION

### 1. Technical Field

The present invention pertains to multi-layered laminated composites and method therefor. More specifically, the invention relates to a multilayered laminated composite article having a plurality of integrally molded thermoplastic resin layers on a polynorbornene-type matrix made by the bulk ring-opening polymerization of norbornene-type monomers. The thermoplastic resin layers are useful as tie layers between the polynorbornene-type matrix and a polyvinyl halide substrate.

### 2. State of the Art

Techniques for the manufacture of a molded product by in-mold polymerization such as reaction injection molding (RIM), liquid injection molding (LIM), resin transfer molding (RTM), or reaction casting (RC) are well-known. In the in-mold polymerization of norbornene-type monomers a reactive solution comprising a norbornene-type monomer and a metathesis catalytic system (a metathesis catalyst and cocatalyst) is injected into a mold and subjected to bulk ring-opening polymerization as described in U.S. Patent No. 4,426,502.

U.S. Patent No. 5,137,785 discloses a method for the manufacture of integrally molded laminate comprising a ring-opened norbornene-type polymer matrix layer and a polyolefinic surface layer. Such laminates are obtained by depositing polyolefinic substrate into a mold, conveying a reactive norbornene-type monomer solution into the mold, and then polymerizing the monomer (via metathesis polymerization) in contact with the polyolefinic substrate. A composite laminate with good interface adhesion is obtained.

Many advantages are realized from integrally molded composites formed in this manner: (1) the manufacture of sandwich-type composite panels having a polynorbornene core integrally molded between two sheet-like substrates is relatively easy; (2) improving the weather resistance of a norbornene-type polymeric article by forming a weather resistant surface layer thereon; (3) forming a surface layer on a polynorbornene matrix that is easily colorable or printable; and (4) preventing odor emanation due to residual unreacted monomers by forming a barrier layer on or around the polynorbornene matrix.

The manufacture of composite molded articles have been proposed wherein a layer formed from an olefinic polymer or a hydrocarbon-type thermosetting elastomer is disposed on a matrix formed from a norbornene-type monomer by reaction injection molding; see U.S. Patent No. 5,137,785 (described above) and Japanese Laid-Open Publications 3-65319 and 3-69356. These composite molded products exhibit excellent characteristics, such as good interface adhesion, flexibility in coloring the surface layer, improved weather resistance, and resistance to the formation of sink marks.

One drawback, however, is that olefinic polymers such as polyethylene, which adhere well to ring-opened norbornene-type polymers do not adhere to other polymers. Accordingly, such composites can not be employed in applications where the composite must be laminated to other polymer layers. For example, polyvinyl chloride (PVC) will not fuse well with the polyolefinic. Consequently, PVC substrates cannot be integrally laminated to a polynorbornene matrix through a polyolefinic tie layer. To solve this problem the present inventor attempted to employ an ethylene-vinyl acetate copolymer as a tie layer for PVC substrates. While it was found that ethylene-vinyl acetate between copolymer adhered well to PVC, it was discovered that the interface adhesion between ethylene-vinyl acetate and the polynorbornene matrix was somewhat less than the adhesion between a polyolefinic layer. Moreover, the adhesion between the ethylene vinyl acetate layer and the polynorbornene matrix was particularly inferior when the polynorbornene matrix was reinforced with glass fibers. Accordingly, there is still a need for a method to integrally fuse or bond a polynorbornene matrix to a polyvinyl halide substrate.

### SUMMARY OF THE INVENTION

The present inventors have discovered that a bilayered laminate made from a polyolefinic resin layer and an ethylene-vinyl acetate (EVA) copolymer layer provides an excellent tie layer between a polynorbornene matrix and a polyvinyl halide substrate.

Broadly stated it is an object of the present invention to provide a laminated composite comprising a polynorbornene matrix with a bilayered polyolefinic/EVA laminate integrally molded thereon.

It is another object of the present invention to provide a polymer composite having an integrally molded tie layer for adhering incompatible polymeric substrates to a ring-opened polynorbornene matrix.

It is a further object of the present invention to provide a laminated composite having an integrally molded tie layer without the need for special adhesives.

It is another object of the present invention to provide a laminated composite comprising an integrally molded polynorbornene matrix, a tie layer comprising a bilayered laminate of a polyolefinic resin layer and an EVA layer, and a polyvinyl chloride substrate layer which is bondable to the EVA layer of the tie layer.

It is still another object of the present invention to provide a method for producing an integrally molded laminated composite comprising a ring-opened polynorbornene matrix and a bilayered tie layer.

These and other objects of the present invention are accomplished by placing a bilayered substrate comprising a polyolefinic ply and an EVA ply into a mold, conveying a reactive monomer solution comprising at least one norbornene-type monomer into the mold cavity in contact with at least a portion of a surface of the polyolefinic ply of said tie layer, and then bulk polymerizing the reactive solution.

### DESCRIPTION OF THE INVENTION

The integrally molded laminated composites of the present invention are prepared by the in-mold ring-opening bulk polymerization of at least one norbornene-type monomer in contact with the surface of a multi-ply tie layer comprising a ply derived from a polyolefin and a ply derived from ethylene-vinyl acetate copolymer. The multi-ply tie layer is placed into a mold cavity whereupon a reactive monomer formulation comprising at least one norbornene-type monomer, a metathesis catalyst system, and optional ingredients is conveyed into the mold cavity so as to contact the surface of the polyolefinic ply layer, and polymerized under suitable polymerization conditions as described below. The tie layer is utilized to laminate a polyvinyl halogenated substrate (e.g., PVC) to a polynorbornene matrix. Laminated composites of polynorbornene matrix/polyolefinic ply/ethylene-vinyl acetate ply/PVC substrate are contemplated by the present invention.

By norbornene-type or norbornene monomer is meant that the monomer employed in the method of this invention contains at least one norbornene group. By polynorbornene or norbornene-type polymers is meant that the polymer(s) employed is derived from a monomer(s) containing at least one norbornene group.

### (NORBORNENE-TYPE MONOMERS)

The matrix polymer utilized in the composites of this invention is a polymer obtained by the metathesis ring-opening polymerization of at least one norbornene-type monomer. The use of a tricyclic or higher cyclic norbornene-type monomer is preferred and gives the integrally molded composites of this invention high thermal deformation temperatures. Examples of suitable norbornene-type monomers include tricyclic monomers such as dicyclopentadiene, dihydrodicyclopentadiene, and the like; tetracyclic monomers such as tetracyclododence and the like; pentacyclic monomers such as tricyclopentadiene, and the like; heptacyclic monomers such as tetracyclopentadiene and the like. The alkyl (e.g., methyl, ethyl, propyl, butyl, and the like), alkylidene (e.g., ethylidene, and the like), aryl (e.g., phenyl, tolyl, naphthyl, and the like), and polar (e.g., ester, ether, nitrile, halogen, and the like) derivatives of the foregoing monomer types also are within the scope of this invention. The tricyclic, tetracyclic, and pentacyclic monomers are preferred because they are easily obtained, easily polymerized, and polymers thereof are heat resistant.

The foregoing monomers can be used alone to obtain a homopolymer product or two or more can be mixed to obtain a copolymer product. If a thermoset polymer is desired, a crosslinking monomer can be employed. Suitable crosslinking monomers are any polycyclic norbornene-type monomers containing two or more reactive double bonds. Examples include dicyclopentadiene, tricyclopentadiene, tetracyclododecene, and the like. If the norbornene-type monomer selected for use herein is a crosslinking monomer, the use of other crosslinking comonomers are not necessary.

The foregoing tricyclic or higher cyclic structure norbornene-type monomers can be copolymerized with bicyclic and/or monocyclic olefins monomers so long as the properties of the resulting polymer is not impaired. Examples of suitable bicyclic olefins include norbornadiene, 2-norbornene, 5-methyl-2-norbornene, 5-ethylidene-2-norbornene, 5-phenyl-2-norbornene, and the like. Suitable monocyclic olefins include cyclobutene, cyclopentene, cyclopentadiene, cyclooctene, cyclododecene, and the like.

### (CATALYST SYSTEM)

Any known metathesis catalyst and cocatalyst suitable for the ring-opening polymerization of norbornene-type monomers can be employed in the invention (see, for example, Japanese laid open application Nos. 58-127728, 58-129013, 59-51911, 60-79035, 60-18511, and 61-126115. Examples of suitable metathesis catalysts are the halides, oxyhalides, oxides, organic ammonium sales of tungsten, molybdenum, and tantalum, and the like. Examples of suitable cocatalysts are alkylaluminum halides, alkoxyalkylaluminum halides, aryloxyalkylaluminum halides, organotin compounds, and the like.

In addition to the catalyst and cocatalyst, an activating agent can be employed as disclosed in Japanese laid open application No. 60-79035. Halohydrocarbons such as chloroform, carbon tetrachloride, hexachloropentadiene, or metal halides such as silicon tetrachloride, germanium tetrachloride, and lead tetrachloride can be used.

The amount of metathesis catalyst employed ranges from about 0.01 to about 50 mmol, preferably about 0.1 to about 10 mmol per mole of norbornene-based monomer utilized. The amount of cocatalyst utilized ranges from about 0.1 to about 200 mole ratio based on the catalyst component, preferably in the 2 to 10 (mole ratio) range.

Preferably, the metathesis catalyst and cocatalyst are dissolved in the monomer. So long as product quality is not affected, the catalyst and cocatalyst can be suspended or dissolved in a solvent before introduction into the monomer.

### (ADDITIVES)

The polymer properties of the matrix material can be modified by the addition of additives such as antioxidants, filler materials, strengthening materials, pigments, coloring agents, foaming agents, flame retardants, lubricants, elastomers, and/or dicyclopentadiene-type hydrogenated thermopolymer resins. The additives can be added to either one or both reactant solutions, or may be added to a third reactant solution.

Suitable antioxidants include phenolic, phosphorus, or amine-type compounds that are commonly used in plastics and rubbers.

Suitable fillers include inorganic materials such as milled glass, long glass fibers, glass mat, carbon black, talc, calcium carbonate, mica, and the like. Reinforcing fibers can be used in this invention to strengthen the outer layer.

Suitable elastomers include natural rubber, polybutadiene, polyisoprene, styrene-butadiene copolymer (SBR), styrene-butadiene-styrene block copolymer (SBS), styrene-isoprene-styrene block copolymer (SIS), ethylene-propylene-diene terpolymer (EPDM), ethylene-vinyl acetate copolymer (EVA), and their hydrogenated derivatives. The addition of the elastomer to the reactant solution(s) improves reactant solution viscosity as well as the impact properties of the molded composite product.

In this invention, the reinforcing material may be placed in the mold cavity and then the reaction solution is fed into the cavity and allowed to polymerize in the presence of the reinforcing material. Alternatively, the fiber fillers can be mixed in the reactant solutions before their introduction into the mold. Examples of suitable reinforcing materials are glass fibers, aramid fibers, carbon fibers, ultrahigh molecular weight polyethylene fibers, metal fibers, polypropylene fibers, aluminum coated glass fibers, cotton, acrylic resin fibers, boron fibers, silicon carbide fibers, alumina fibers, and the like. The reinforcing agents can be in the form of long fibers, chopped strand-type mat, fabric, chopped fiber, or many other forms suitable for providing reinforcement. The surface of these reinforcing materials can be treated with a silane coupling agent to improve their adhesion to the resin. There are no restrictions to the amount of reinforcing material utilized, but it is commonly not less than about 20 weight percent, preferably between about 30 to 70 weight percent.

### (TIE LAYER MATERIALS)

The multi-ply tie layer of the present invention comprises a polyolefin ply laminated to an ethylene-vinyl acetate ply (i.e., EVA ply). The polyolefin ply is always laminated onto the polynorbornene matrix, while the EVA ply is always laminated onto the polyvinyl halide substrate. Multi-ply tie layers are contemplated wherein the stacking order of plys can be in any order so long as the outer two plys (i.e., the outer plys on opposite ends of the tie layer laminate) are a polyolefinic ply and an EVA ply. Obviously, if the tie layer includes an integrally laminated polyvinyl halide substrate the EVA ply will be laminated to the outer polyvinyl halide substrate layer.

Suitable polyolefin resins employed in the invention are high-density polyethylene, medium-density polyethylene, low-density polyethylene, super-high-molecular-weight polyethylene, ethylene-propylene copolymer, ethylene-butene-1 copolymer, polypropylene, polybutene-1, polypentene-1, poly-4-methylpentene-1, ethylene-propylene rubber, ethylene-propylene-diene terpolymer, ethylene-acrylate copolymer, and mixtures thereof.

Other polyolefin resins that can be utilized include hydrocarbon based thermoplastic elastomers, nonvulcanized rubber, or mixtures thereof. Examples of hydrocarbon based thermoplastic elastomers include styrene-butadiene block copolymer, styrene-isoprene block copolymer, styrene-butadiene-styrene block copolymer, styrene-isoprene-styrene block copolymer. Examples of nonvulcanized rubber include polybutadiene, polyisoprene, styrene-butadiene copolymer, and the like.

Among the above, polyethylene and polypropylene are preferred.

The ethylene-vinyl acetate copolymer (EVA) employed in the present invention is a thermoplastic resin obtained by the copolymerization of ethylene and vinyl acetate. A vinyl acetate content of about 10 to about 40 weight percent is preferred. It has been found that the amount of vinyl acetate in the EVA copolymer influences the properties of the EVA/polyvinyl halide (e.g., PVC) interface. When the content of vinyl acetate is too low, the adhesion strength to the PVC substrate is lowered. When the vinyl acetate content of the copolymer is too high, the thermal resistance of the EVA ply decreases. The preferred content of vinyl acetate in the EVA copolymer ranges from about 15 to about 30 weight percent. More preferably, the range of vinyl acetate is from about 20 to about 30 weight percent.

Alternatively, an EVA-based hot melt adhesive can be employed as the EVA ply. The EVA hot melt adhesive is commonly a mixture comprising EVA (vinyl acetate content 15 to 30 weight percent) in the amount of 20 to 50 weight percent, a tackifier resin in the amount of 20 to 50 weight percent, a thermal stabilizer in the amount of 0.1 to 1 weight percent, and a small amount of optional additives, such as wax, plasticizer, or filler. The hot melt is extruded with or rolled onto the polyolefinic ply to form a film. The EVA hot melt adhesive should have a melt flow rate (MFR) of 5 to 50, preferably 7 to 20. When the MFR is too high, the heat resistance of the EVA ply is insufficient. When it is too low, the bond strength of the EVA/PVC interface is too low.

### (POLYVINYL HALIDE SUBSTRATE)

The polyvinyl chloride (PVC) employed as a substrate has a degree of polymerization of 500 to 2,900. As defined herein PVC does not have to be homopolymer. It may be a copolymer polymerized from a vinyl halide and any copolymerizable monomer other than ethylene. The amount of the copolymerizable monomer is 10 weight percent or less. The PVC may contain plasticizer, stabilizers, or any of the common polyvinyl halide compounding ingredients. Excess plasticizer should be avoided as the plasticizer may migrate to the EVA/PVC interface causing interface separation. Rigid PVC is preferred.

### (LAMINATE ADDITIVES)

The polyolefin, EVA, and PVC thermoplastics utilized in the present invention can optionally contain fillers, pigments, dyes, ultraviolet absorbents, plasticizers, lubricants, antistatic agents, antifogging agents, and petroleum resin adhesion enhancers.

In at least one layer of the thermoplastic resins (i.e., polyolefin, EVA, and PVC resins employed herein), electrically conductive particles can be added in an amount of 5 to 30 weight percent, preferably 8 to 30 weight percent. Suitable electrically conducting particles are carbon black (Ketjenblack), graphite powder, metal powders (copper, iron, nickel powder, and the like). The conductive particle containing layer can act as a thermogenic (heat producing) layer when an electric current is passed through it. This embodiment is helpful for fusing the tie layer to the PVC substrate.

### (MOLDED COMPOSITE)

According to the method of this invention the tie layer or tie layer/substrate is affixed to a surface of a mold cavity wall. The tie layer or tie layer/substrate can be affixed to any location on the mold cavity surface. More than one tie layer or tie layer/substrate can be affixed to the mold cavity surface. For example in the case where in the mold cavity has a rectangular configuration a sheet like tie layer or tie layer/substrate configuration can be affixed to the top surface of the mold cavity, to the bottom surface of the mold cavity, to the side wall of the mold cavity, within the mold cavity, or combinations thereof. The tie layer or tie layer/substrate can be coextensive with the entire mold cavity surface (e.g., top, bottom, or side) or can be coextensive with only a portion thereof, the effect of which is manifested in a entire surface or a portion of a surface of the polynorbornene matrix being laminated. As stated above, the only proviso is that where adhesion to the polynorbornene-type matrix is desired the olefinic ply must be in contact with the polymerizing monomer solution.

The tie layer or tie layer/substrate component can be affixed to the mold cavity surface by any adhesive that does not permanently bond to the mold cavity surface. The adhesive should be selected so that it readily releases from the mold cavity surface (after the polymerization reaction) with minimal force. The adhesive is applied to the surface of the substrate that will contact the mold cavity wall. Alternatively, double sided tape can be used to affix the substrate component to the mold cavity surface or wall.

Following the affixment of the tie layer or tie layer/substrate component to the mold cavity surface(s), a reaction solution comprising a norbornene-type monomer and metathesis catalyst system is injected into the mold (in intimate contact with the surface of the polyolefinic ply) and allowed to polymerize by bulk ring-opening polymerization. Following the polymerization reaction (after allowing sufficient time for cooling), an integrally molded composite comprising a polynorbornene matrix/tie layer or polynorbornene matrix/tie layer/PVC substrate is removed from the mold. The composite has excellent interface adhesion between the laminate layers without the need for adhesives.

In an alternative embodiment of this invention, the tie layer can be used as a core component in the composite. In this embodiment the core component is placed in a mold cavity of a desired configuration such that a gap is formed between the core component and the surfaces of the mold cavity. In some composite configurations the core ends can extend up to and through the mold cavity side wall. When the mold cavity is filled with the monomer reaction, the core is completely or substantially surrounded by the reaction solution. Methods of placing core components in molds are disclosed in copending patent application No. 07/690,038 filed on April 23, 1991, the disclosure of which is hereby fully incorporated by reference. Tie layer also can be stacked within the mold cavity such that a gap is provided between layers. The tie layer layers can be spaced apart by using spacer elements at each corner of the substrate. Integral spacer elements can be molded into the substrate so when stacked a space or gap is formed between adjacently stacked tie layers. The gaps and spaces between the tie layers provide a channel which will eventually be filled with reaction solution.

### (TIE LAYER AND SUBSTRATE CONSTRUCTION)

The tie layer comprising the polyolefin/EVA laminate or the tie layer/substrate comprising the polyolefin/EVA/PVC laminate can be prepared by thermal fusion bonding of sheets or films of the respective plys, by coextrusion of the two- or three-ply substrate components, or by extrusion of the EVA layer onto a polyolefin sheet. The PVC substrate can be of a tubular construction whereby a polyolefin-based/EVA tie layer is wrapped around the tube (perpendicular to the long axis of the tube) such that the EVA layer is the inner layer in contact with the PVC. In another embodiment a tie layer can be wrapped around a metal mandrel (EVA ply in contact with the mandrel) and the polynorbornene matrix can be polymerized around the tie layer wrapped mandrel. When the mandrel is removed, a tubular composite is obtained with a polynorbornene outer layer and a EVA inner ply tied together with a polyolefin. This composite can function as a pipe coupler by inserting a PVC pipe into both ends of the composite (in contact with the EVA ply) and then fusion bonding the EVA to the PVC pipe.

For molds having intricate configurations the tie layer can be vacuumed formed onto the mold carity surface.

### (POLYMERIZATION)

In the method of the present invention, the bulk polymerization of norbornene-type monomers in the presence of the metathesis catalyst system is carried out in a mold. A small amount of inert solvent may be present in the formulation so long as the solvent does not adversely affect the polymerization reaction or polymer product produced therefrom.

A preferred bulk ring-opening polymerization method is to divide a norbornene-type monomer solution into two portions and to store them in separate containers. Into one container, the metathesis catalyst is added to form one reactant solution and into the other, the cocatalyst is added to form the other reactant solution. The activating agent, if desired, is preferably added to the cocatalyst reactant solution, but it also can be added to either container or to both containers. The two reactant solutions are then mixed and injected into a mold wherein the reactive solution is in intimate contact with at least one surface of the ethylene-vinyl chloride and/or core component. The bulk ring-opening polymerization reaction is then carried out in the mold cavity.

Molds made of resin, wood, steel, or aluminum can all be used safely. The mold cavity may be of any shape depending on the desired configuration of the composite product.

The two reactant solutions are mixed by using a conventional reaction injection mold (RIM) apparatus. In this case the two reactant solutions are stored in two separate vessels and serve as the source for the two reactant feed streams. The two streams are intimately mixed in the mixing head of the RIM apparatus (impingement mixing head) to form the reaction solution. The mixture is injected into a preheated metal mold and bulk polymerized to produce the integrally molded composite product.

Optionally, after mixing the two reactant solutions, the mixture can be conveyed (poured or injected) into a mold in several portions (batch feeding) as taught in U.S. Patent No. 4,426,502. Alternatively the reaction solution can be injected in a continuous mode. With this method, the apparatus is smaller in comparison to an impingement type mixing apparatus, allowing the process to be carried out at low operating pressures. When a large amount of glass fiber reinforcement is utilized within the mold, the injection of reaction solution may be carried out at a low injection speed to allow the solution to homogeneously infiltrate the glass fibers.

This invention is not limited to a two reactant stream process. A third reactant stream (or a plurality of streams) containing an additional reactant(s) or additive(s) can be employed in the present process.

The mold temperature employed is commonly greater than room temperature (e.g., above 30°C), preferably between about 40 to 200°C, and more preferably between about 50 to 130°C. The mold pressure is commonly between about 0.1 to 100 kg/cm².

The polymerization time can be determined as needed. However, the time from feeding the reactive solution into the mold cavity to the onset of the polymerization preferably should be less than 20 minutes, preferably within 5 minutes, and more preferably within 2 minutes.

The reactant solutions are stored under an inert gas atmosphere such as nitrogen, and also should be processed under such an inert atmosphere. However, the mold does not necessarily have to contain an inert gas.

A foaming agent can be placed in one or both of the reactant solutions. Suitable foaming agents include aliphatic hydrocarbons such as pentane, hexane, and the like, halohydrocarbons such as methylene chloride, trichlorofluoromethane, dichlorodifluoromethane, and the like; or inert gases such as nitrogen, argon, and the like.

Certain embodiments of the present invention will now be described with reference to the following examples which are not intended to serve as a limitation of the scope thereof. In the examples, all parts are parts by weight and all percentages are percentages by weight unless otherwise specified.

### EXAMPLE 1

Catalyst and cocatalyst reactant formulations were prepared as follows:
To 100 parts of a mixed monomer solution including dicyclopentadiene (DCPD) and tricyclopentadiene (TCP) in a ratio of 9:1 (by weight), 6.5 parts of styrene-isoprene-styrene (SIS) block copolymer (Quintac 3421 manufactured by Nippon Zeon Co.), and 1 part of polybutadiene (BR-1220 manufactured by Nippon Zeon Co.) were added and mixed. Equal aliquots of resultant monomer solution was placed in two vessels. Into one of the vessels, diethylaluminum chloride (DEAC) cocatalyst, n-propanol, and silicon tetrachloride were added to give concentrations of 40 mmoles, 42 mmoles, and 20 mmoles, respectively. Into the other vessel, tri(tridecyl)ammonium molybdate catalyst was added to give a concentration of 10 mmoles. Three parts of a phenol-type antioxidant (Ethanox 702 manufactured by Ethyl Corporation) per 100 parts of the monomer formulation was then added.

An EVA-based hot melt adhesive (Hirodain 7514, 20% vinyl acetate content, MFR = 95, Hirodain Industries) was extrusion coated onto a low density polyethylene (melt index 0.3, specific gravity 0.92, melting point 110°C) sheet (1 mm thickness), to form a 35 micrometer thick layer.

The laminated sheet was placed with the EVA side down on one side of a split mold having a mold cavity measuring 200 mm x 200 mm x 5 mm. Thermold was then heated to 70°C. The catalyst and cocatalyst formulations were mixes in a 1:1 ratio and injected into the cavity of the mold. The polymerization reaction proceeded for about three minutes, resulting in an integrally molded laminated composite comprising a polynorbornene-type matrix with a polyethylene/EVA layer bonded thereto. The molding operation was carried out under a nitrogen atmosphere.

The resulting composite material was shattered by a dropping weight onto the composite. The interface of the polyethylene norbornene-type matrix layer did not rupture or peel.

### EXAMPLE 2

Electrically conducting carbon black (Ketjenblack EC) was added to the low-density polyethylene set forth in Example 1 in an amount of 25 percent. The resulting mixture was extrusion molded to form a 1 mm thick sheet. An EVA-based hot melt adhesive (Hirodain 7514) was extrusion coated to a 50 micrometer thickness on the polyethylene sheet.

The resulting laminated sheet was wrapped around a metal mandrel (23 mm outside diameter) with the polyethylene layer facing the outside. The core with the laminated sheet was placed in an aluminum split mold having a 2 mm gap between the surface of the laminated core and the mold cavity wall. The laminated core ends protruded through the mold cavity (5 mm on each end) so as to not be exposed to the reactive monomer formulation. The exposed ends provide electrode attachment means for the subsequent passing of electrical current. The reaction solution used in Example 1 was conveyed into the gap of the mold and allowed to polymerize. An electrically conductive integrally molded polynorbornene matrix/PE/EVA laminated tubular composite product (40 mm length) was obtained after removal of the mandrel.

The tubular composite product was heated to 80°C, and then a stainless steel rod of 24 mm diameter heated to 80°C was inserted into the hollow of the product in order to enlarge the inside diameter of the tube to a 24 mm inside diameter. The resulting piece was used as a PVC pipe coupler.

On both ends of the pipe coupler, a PVC pipe section of 22.5 mm outside diameter and 3 mm wall thickness was inserted until they met at the mid-point. The exposed end of the thermoplastic layer (the thermogenic part) of the coupler was connected to an annular copper electrode to provide a terminal. The terminal was then connected to a 30-V alternating current source and an electric current was passed through the coupler to generate heat for eight minutes. Upon heating, the norbornene-base resin substrate returned to its original shape and at the same time the EVA layer of the coupler fusion bonded to the surface of the PVC pipe. After cooling, the coupler was cut lengthwise into four pieces to prepare specimens for tensile strength tests. Each piece was tested on the tensile tester at a pull rate of 50 cm/minute. Each specimen ruptured at the pipe section, the coupler remained strongly bonded.

### EXAMPLE 3

An EVA-based hot melt adhesive (Hirodain 7514) was extrusion coated onto a low-density polyethylene (melt index 0.3, specific gravity 0.92, melting point 110°C) sheet (1 mm thickness) to form a 35 micrometer thick layer. A polyvinyl chloride (103EP, Nippon Zeon Co.) sheet (1 mm thickness) was thermally bonded onto the EVA layer to give a three-layered laminated sheet.

The multi-layered laminated sheet was placed into a mold cavity as set forth in Example 1 and an integrally molded composite article was prepared in the same manner. The laminated sheet was affixed to the inside of the mold cavity with the PVC side down and then reaction molding operation was carried out.

The resulting composite plate possessed excellent interfacial adhesion at the substrate and polyethylene interface as well as at the other interfaces.

### EXAMPLE 4

### (COMPARISON)

The laminated sheet of Example 1 was replaced with a polyvinyl chloride (103EP, Nippon Zeon Co.) sheet (1 mm thickness), and then a composite product was prepared according to the procedure of Example 1. The resulting composite material had an unacceptable adhesion between the substrate and the sheet, and the layers readily peeled off. In view of interface adhesion, preferably, the electrically conductive particles are added to the polyolefin layer.

## Claims

1. An integrally molded composite article comprising a ring-opened norbornene-type polymer matrix and a multi-ply tie layer, at least one ply of said tie layer comprises an olefinic polymer and at least another ply of said tie layer comprises an ethylene-vinyl acetate copolymer, and said norbornene-type polymer is derived from at least one norbornene-type monomer, wherein said norbornene-type monomer is bulk polymerized in a mold in contact with a surface of said olefinic polymer ply of said tie layer.

2. An integrally molded composite article comprising a ring-opened norbornene-type polymer matrix with a two-ply tie layer laminated thereon, wherein one ply of said tie layer comprises an olefinic polymer and the other ply of said tie layer comprises an ethylene-vinyl acetate copolymer, and wherein said norbornene-type monomer is bulk polymerized in a mold in contact with a surface of said olefinic polymer ply of said tie layer.

3. The composite article of claim 1 or 2 wherein a polyvinyl halide based substrate is laminated to said ethylene-vinyl acetate copolymer ply of said tie layer.

4. The composite article of claim 1 or 2 wherein said olefinic polymer ply of said tie layer is selected from the group consisting of high-density polyethylene, medium-density polyethylene, low-density polyethylene, super high molecular weight polyethylene, ethylene-propylene copolymer, ethylene-butene-1 copolymer, polypropylene, polybutene-1, polypentene-1, poly-4-methylpentene-1, ethylene-propylene rubber, ethylene-propylene-diene terpolymer, ethylene acetate copolymer; styrene-butadiene block copolymer, styrene-isoprene block copolymer, styrene-butadiene-styrene block copolymer, styrene-isoprene-styrene block copolymer, polybutadiene, polyisoprene, styrene-butadiene copolymer, and mixtures thereof.

5. The composite article of claim 1 or 2 wherein said ethylene-vinyl acetate copolymer ply of said tie layer comprises from about 10 to about 40 weight percent vinyl acetate.

6. The composite article of claim 5 wherein said ethylene-vinyl acetate copolymer comprises from about 15 to about 30 weight percent vinyl acetate.

7. The composite article of claim 1 or 2 wherein said ethylene-vinyl acetate ply is an ethylene-vinyl acetate based hot melt adhesive.

8. The composite article of claim 3 wherein said polyvinyl halide substrate is polyvinyl chloride homopolymer having a degree of polymerization from about 500 to about 2,900.

9. The composite article of claim 3 wherein said polyvinyl halide is a copolymer polymerized from vinyl chloride and any other copolymerizable monomer therewith except ethylene, and wherein said any other copolymerizable monomer is present in an amount of 10 percent or less.

10. The composite of claim 1 or 2 wherein said olefinic polymer and said ethylene-vinyl acetate copolymer further comprises electrically conductive particles selected from the group consisting of carbon black, graphite, copper, iron, and nickel.

11. The article of claim 1 or 2 wherein the norbornene-type polymer matrix is derived from at least one norbornene-type monomer selected from the group consisting of dicyclopentadiene, dihydrocyclopentadiene, tetracyclododecene, tricyclopentadiene tetracyclopentadiene, including the alkyl, alkylidenyl, halogen, and polar substituents thereof.

12. The composite of claim 11 wherein said monomer further comprises a cycloolefin monomer selected from the group consisting of 2-norbornene, 5-methyl-2-norbornene, 5-ethylidene-2-norbornene, 5-phenyl norbornene, cyclobutene, cyclopentene, cyclopentadiene, cyclooctene, cyclododecene, and mixtures thereof.

13. A method for integrally molding a polvinyl halide substrate to a rib-opened polynorbornene matrix comprising the steps of providing a mold having a multi-ply tie layer disposed therein wherein said tie layer comprises a polyolefinic ply/ethylene-vinyl acetate ply laminated to a polyvinyl halide substrate; feeding a bulk polymerizable liquid reaction solution comprising at least one norbornene-type monomer, a metathesis catalyst, and a cocatalyst in said mold, wherein said liquid reaction solution is in contact with said polyolefinic ply of said tie layer; and polymerizing said reaction solution to obtain an integrally molded article.

14. The method of claim 13 wherein said norbornene-type monomer is selected from group consisting of dicyclopentadiene, dihydrocyclopentadiene, tetracyclododecene, tricyclopentadiene tetracyclopentadiene, including the alkyl, alkylidenyl, halogen, and polar substituents thereof.

15. The method of claim 14 wherein said monomer further comprises a cycloolefin monomer selected from the group consisting of 2-norbornene, 5-methyl-2-norbornene, 5-ethylidene-2-norbornene, 5-phenyl norbornene, cyclobutene, cyclopentene, cyclopentadiene, cyclooctene, cyclododecene, and mixtures thereof.

16. The method of claim 13 wherein said olefinic ply is selected from the group consisting of high-density polyethylene, medium-density polyethylene, low-density polyethylene, super high molecular weight polyethylene, ethylene-propylene copolymer, ethylene-butene-1 copolymer, polypropylene, polybutene-1, polypentene-1, poly-4-methylpentene-1, ethylene-propylene rubber, ethylene-propylene-diene terpolymer, ethylene acetate copolymer; stryrene-butadiene block copolymer, styrene-isoprene block copolymer, styrene-butadiene-styrene block copolymer, styrene-isoprene-styrene block copolymer, polybutadiene, polyisoprene, styrene-butadiene copolymer, and mixtures thereof.

17. The method of claim 16 wherein said polyolefinic ply is selected from the group consisting of polyethylene or polypropylene.

18. The method of claim 13 wherein said ethylene-vinyl acetate has a vinyl acetate content of from about 15 to about 30 weight percent.

19. The method of claim 13, wherein said polyvinyl halide substrate is PVC homopolymer.
